# EUROPEAN PATENT SPECIFICATION

(11) **EP 4 300 658 B1**
(45) Date of publication and mention of the grant of the patent: **29.07.2026**
(21) Application number: 22831336.7
(22) Date of filing: 12.04.2022
(51) Int. Cl.: H01M 10/613, H01M 10/615, H01M 10/617, H01M 10/6554, H01M 10/6556, H01M 10/6567, H01M 10/658, H01M 10/653, F28D 9/00

(54) **COMPOSITE TEMPERATURE CONTROL BOARD AND BATTERY PACK**
VERBUNDTEMPERATURSTEUERTAFEL UND BATTERIEPACK
CARTE DE RÉGULATION DE TEMPÉRATURE COMPOSITE ET BLOC-BATTERIE

(30) Priority: 29.06.2021 CN 202121466629 U
(43) Date of publication of application: 03.01.2024
(73) Proprietor: BYD Company Limited, Shenzhen, Guangdong 518118 (CN)
(72) Inventor: YOU, Yueqiu, Shenzhen, Guangdong 518118 (CN); WANG, Xiao, Shenzhen, Guangdong 518118 (CN); WU, Yanfeng, Shenzhen, Guangdong 518118 (CN); ZHENG, Weixin, Shenzhen, Guangdong 518118 (CN); LU, Zhipei, Shenzhen, Guangdong 518118 (CN)
(74) Representative: Arnold & Siedsma
(86) International application number: PCT/CN2022/086245
(87) International publication number: WO 2023/273505

(56) References cited:
- CN-U- 206 163 576
- CN-U- 211 743 352
- CN-U- 212 366 062
- CN-U- 215 070 133

## Description

### FIELD

The present disclosure relates to the field of battery technologies, and specifically to a composite temperature control plate and a battery pack.

### BACKGROUND

With the shortage of conventional energy and the increasingly prominent environmental problems, the development of new energy vehicles that can replace conventional vehicles has gradually become a focus of attention. A battery pack is a core component of a new energy vehicle, and its safety is of great significance. The internal temperature of the battery pack directly affects the safety of the battery pack, and therefore affects the usage safety of the vehicle. To improve the safety of the battery pack, it is necessary to control the temperature of the internal structure of the battery pack. Therefore, it is very important to improve the heat dissipation performance of the whole structure.

A battery pack mainly includes a battery module. The battery module generates heat during normal operation, leading to a temperature rise inside the battery module. When the temperature is excessively high, potential safety hazards are caused, and electrolyte solution leakage, gas discharge, smoke generation, and other phenomena may occur in the battery. In severe cases, the battery burns violently or even explodes. In addition, the usage environment of the battery pack is complicated, and an excessively low ambient temperature is also not conducive to the normal operation of the battery pack. To eliminate the above risks, a temperature control plate is often used to provide heat dissipation or preservation for the battery module. A temperature control plate in the related art is made of an aluminum alloy, which has a high thermal conductivity that leads to an unduly fast heat dissipation of the temperature control plate and is not conducive to the heat preservation performance of the battery pack. In addition, the temperature control plate is directly friction welded with other structures of the battery pack, and the joint is prone to deformation, resulting in a shortened service life.

CN 206 163 576 U discloses a battery pack comprising a temperature control plate according to the preamble of claim 1 arranged below battery modules and a supporting structure arranged below the temperature control pipeline. The supporting structure comprises a heat insulating layer and a support plate fixed together. The support plate may comprise guide rails with clips for fixing the supporting structure to the outside.

### SUMMARY

An objective of the present disclosure is to provide a composite temperature control plate and a battery pack to at least solve one of the problems described in the background.

A first aspect of the present disclosure provides a composite temperature control plate applied to a battery pack as defmed in claim 1, including:
a temperature control layer, configured to lower or raise a temperature of the battery pack; and
a protective layer, laminated and fixed on the temperature control layer;
the protective layer includes a heat insulating layer, the heat insulating layer is made of a heat insulating material;
the protective layer includes a mounting portion extending at least to a periphery of the temperature control layer, the mounting portion is configured to connect with outside.

The temperature control layer is entirely embedded on the heat insulating layer, a material strength of the heat insulating layer is higher than a material strength of the temperature control layer, and a portion of the heat insulating layer extending to the periphery of the temperature control layer is the mounting portion.

Optionally, the protective layer further includes a protection layer, and a material strength of the protection layer is higher than a material strength of the heat insulating layer.

Optionally, a thermal conductivity of the heat insulating layer is lower than a thermal conductivity of the protection layer.

Optionally, the protective layer further includes a foam layer, and the foam layer is arranged between the heat insulating layer and the protection layer.

Optionally, the temperature control layer is made of an aluminum alloy material, the heat insulating layer is made of a glass fiber material, the protection layer is made of a carbon fiber material, and the foam layer is made of polyurethane, phosphoenolpyruvate, or polyvinyl chloride.

Optionally, the temperature control layer includes a first temperature control layer and a second temperature control layer, the first temperature control layer and the second temperature control layer are joined to form a flow channel structure, and the flow channel structure is configured for a liquid medium to circulate.

A second aspect of the present disclosure provides a battery pack, including:
a tray, a battery module, and a composite temperature control plate according to the first aspect.

The tray is connected with the mounting portion. The tray and the composite temperature control plate form a sealed cavity. The battery module is arranged in the cavity. The battery module is in contact with the temperature control layer.

Optionally, the tray and the mounting portion are connected by a coordination of a sealant and a fastener.

Optionally, a sealant accommodating groove is provided on the tray, and the sealant is filled in the sealant accommodating groove.

One technical effect of the present disclosure lies in that the composite temperature control plate of the present disclosure includes the mounting portion extending at least to the periphery of the temperature control layer, and the mounting portion is used as a structure for connecting with outside, so that the problem of easy deformation of the temperature control layer used for connection is solved, thereby improving the connection reliability.

Other features and advantages of the present disclosure will become apparent from the following detailed description of exemplary embodiments of the present disclosure with reference to the drawings.

### BRIEF DESCRIPTION OF THE DRAWINGS

The accompanying drawings constitute a part of this specification, illustrate embodiments of the present disclosure, and are used together with this specification to describe the principle of the present disclosure.
FIG. 1 is a partial schematic structural laminated view of a composite temperature control plate according to the present disclosure;
FIG. 2 is a partial schematic structural exploded view of a composite temperature control plate according to the present disclosure;
FIG. 3 is a schematic diagram showing the connection between a composite temperature control plate and a tray according to the present disclosure;
FIG. 4 is a schematic cross-sectional view showing the connection between a composite temperature control plate and a tray according to the present disclosure; and
FIG. 5 is a schematic cross-sectional view showing the connection between a composite temperature control plate and a tray by a sealant and a fastener according to the present disclosure.

### List of reference numerals:

1 - temperature control plate; 11 - temperature control layer; 111 - first temperature control layer; 112 - second temperature control layer; 12 - heat insulating layer; 121 - mounting portion; 13 - foam layer; 14 - protection layer; 2 - tray; 21 - fastener; 22 - sealant accommodating groove.

### DETAILED DESCRIPTION

Various exemplary embodiments of the present disclosure are now be described in detail with reference to the accompanying drawings. It should be noted that unless otherwise specified, opposite arrangement, numerical expressions, and numerical values of components and steps described in the embodiments do not limit the scope of the present disclosure.

The following descriptions of at least one exemplary embodiment are merely illustrative, and in no way constitute any limitation on the present disclosure and application or use of the present disclosure.

Technologies and devices known to those of ordinary skill in related arts may not be discussed in detail, but where appropriate, the techniques and the devices should be considered as a part of the specification.

In all examples shown and discussed herein, any specific value should be construed as merely exemplary and not as limitations. Therefore, other examples of exemplary embodiments may have different values.

It should be noted that like numerals and letters denote like terms in the following drawings. Therefore, once an item is defined in one accompanying drawing, the item does not need to be further discussed in the subsequent accompanying drawings.

The working principle of a temperature control plate (liquid cooling cold plate) is as follows. Excess heat generated during operation of a battery is transferred by contacting with a surface of a plate-type aluminum device. A liquid cooling system uses the characteristic of high heat transfer coefficient of flowing liquid, to transfer high heat through flowing liquid, and the heat is finally taken away by a coolant flowing through a flow channel in the device. A battery module in a battery pack has certain requirements on the temperature control plate: First, the temperature control plate needs to have high heat dissipation power, to quickly take away heat generated by the module and prevent the temperature from rising sharply. Second, the temperature control plate needs to have high reliability. For use in a vehicle that needs to travel on roads, the battery pack in an operating state needs to be tested in various environments, such as vibration, impact, high temperature, low temperature and other harsh operating environments. Finally, the heat dissipation design of the temperature control plate needs to be precise to avoid an excessively large temperature difference in the system. The operating temperature has an important impact on the performance and aging of the battery.

In view of the above problems, the design of a temperature control plate in the related art generally adopts an aluminum substrate embedded with a copper pipe. To be specific, grooves are formed on an aluminum substrate using a computer numerical control technology, and then a bent copper pipe is pressed onto the aluminum substrate by a punching machine, followed by brazing welding. The aluminum substrate has a high thermal conductivity and solves the problem regarding the heat dissipation power, but the high thermal conductivity leads to unduly fast heat dissipation of the temperature control plate and is not conducive to heat preservation. In addition, in terms of reliability and heat dissipation design, the temperature control plate in the related art is generally connected to an external structure by friction stir welding. Because the aluminum material has a yield strength of about 50 MPa and a tensile strength of about 150 MPa and is soft, deformation is likely to occur at the joint with the external structure.

To solve the above problems, the present disclosure provides a composite temperature control plate for a battery pack, which includes a temperature control layer 11 and a protective layer. The temperature control layer 11 is configured to lower or raise a temperature of the battery pack. The protective layer is laminated and fixed on the temperature control layer 11. The protective layer includes a heat insulating layer 12. The heat insulating layer 12 is made of a heat insulating material. The protective layer includes a mounting portion 121 extending at least to an periphery of the temperature control layer 11. The mounting portion 121 is configured to connect with outside.

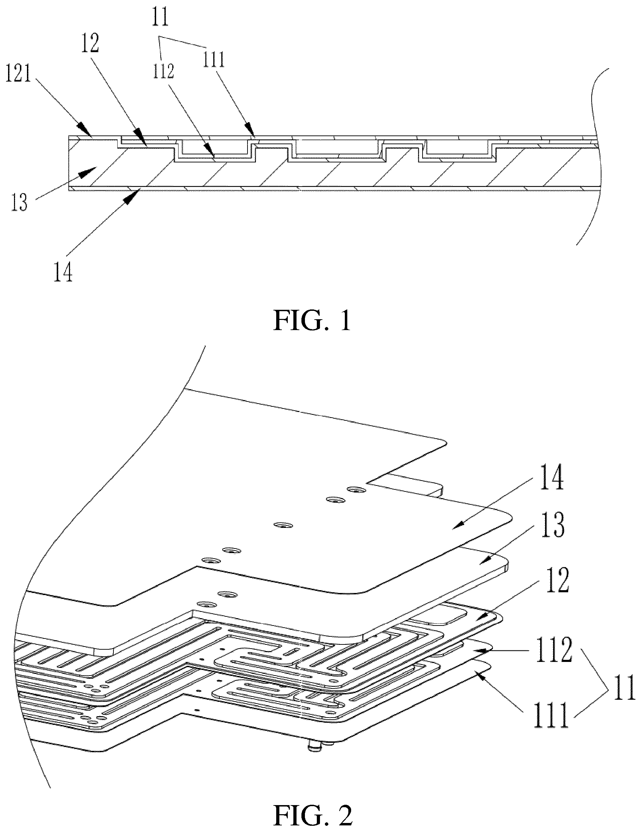

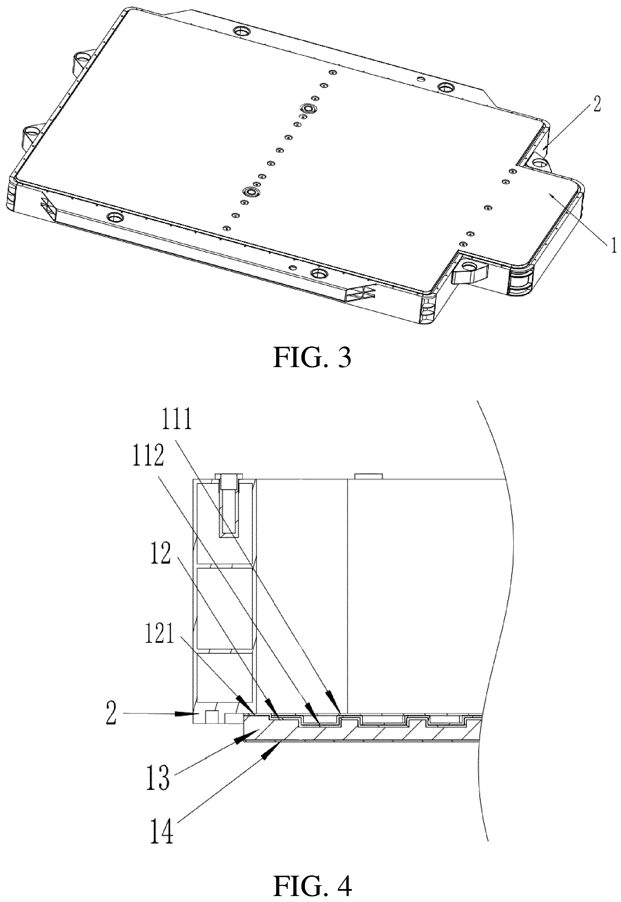

Specifically, as shown in FIG. 1 to FIG. 2, in this embodiment, the composite temperature control plate 1 is adopted. Such a temperature control plate 1 is formed by the temperature control layer 11 and the protective layer combined with each other. The structure of the temperature control layer 11 may be in the form of an aluminum substrate and a copper pipe, or may directly be in the form of a pipe plate for a liquid medium to flow, etc., which is not limited in the present disclosure. The liquid medium (e.g., coolant) may flow through the pipe in the temperature control layer 11 to lower or raise the temperature of the battery pack. The mounting portion 121 extending at least out of the periphery of the temperature control layer 11 is arranged on the protective layer for connection with the outside, i.e., for connection with other structures in the battery pack, such as a tray 2 (referring to FIG. 3). The mounting portion 121 mainly provides connection and fixing functions. In this embodiment, that the protective layer at least extends to the periphery of the temperature control layer 11 may mean that an entire periphery of the protective layer extends to the periphery of the temperature control layer to form the mounting portion 121, or two edges or a part of an edge of the protective layer extends to the periphery of the temperature control layer to form the mounting portion 121. The use of the mounting portion 121 as a structure for connecting with outside avoids the problem of easy deformation at the joint, improves the connection reliability, and can support the temperature control layer 11 to a certain extent.

In addition, the protective layer further includes a heat insulating layer 12 made of a heat insulating material, to isolate the heat of the temperature control plate 1, slow down the heat exchange between the temperature control layer 11 and the external environment, and provide a better heat insulating and preservation effect for the temperature control plate 1.

In this embodiment, the lamination and fixation of the temperature control layer 11 and the protective layer may be implemented by a moulding process. The temperature control layer and the protective layer can be more reliably combined and fixed by the moulding process. In addition, the pressure applied in the moulding process is low, and the flow channel for the liquid medium to flow in the temperature control layer 11 will not be flattened. During the die pressing process, a portion (i.e., the mounting portion 121) may be left at the periphery of the protective layer for connection with an external structure (e.g., the tray 2). In this embodiment, the temperature control layer 11 is not directly connected with the outside, so that the rigidity at the joint can be enhanced and the connection reliability can be improved.

Optionally, as shown in FIG. 1, the temperature control layer 11 is entirely embedded on the heat insulating layer 12, a material strength of the heat insulating layer 12 is higher than a material strength of the temperature control layer 11, and a portion of the heat insulating layer 12 extending to the periphery of the temperature control layer 11 is the mounting portion 121.

Specifically, during the moulding process, the temperature control layer 11 may be directly entirely embedded on the heat insulating layer 12, the temperature control layer 11 is enclosed by a periphery of the heat insulating layer 12, and any portion of the heat insulating layer 12 extending to the periphery of the temperature control layer 11 may serve as the mounting portion 121 for connection with the outside. The strength of the material of the heat insulating layer 12 is higher than that of the temperature control layer 11, to make the joint firmer. In addition, such an embedding manner not only can make the joint of the temperature control plate 1 and the battery pack less prone to deformation, but also can better protect the entire temperature control layer 11, to prevent the structure of the temperature control layer 11 from being damaged, thereby prolonging the service life of the temperature control plate 1.

Optionally, the protective layer further includes a protection layer 14. The temperature control layer 11, the heat insulating layer 12, and the protection layer 14 are sequentially laminated, and a material strength of the protection layer 14 is higher than a material strength of the heat insulating layer 12.

Specifically, in practical use, the protection layer 14 is located on an outer side of the temperature control layer 11 and the heat insulating layer 12, and the material strength of the protection layer 14 is higher than those of the heat insulating layer 12 and the temperature control layer 11, so that the overall rigidity of the entire temperature control plate 1 can be improved to effectively resist the impact of the external environment, for example, impact by stone.

Optionally, a thermal conductivity of the heat insulating layer 12 is lower than a thermal conductivity of the protection layer 14.

Specifically, with the thermal conductivity of the heat insulating layer 12 being lower than the thermal conductivity of the protection layer 14, heat of the temperature control layer 11 can be effectively isolated from diffusing to the protection layer 14, or heat in the external environment can be isolated from being transferred to the temperature control layer 11 through the protection layer 14, thereby providing a better heat preservation effect.

Optionally, the protective layer further includes a foam layer 13, and the foam layer 13 is arranged between the heat insulating layer 12 and the protection layer 14.

Specifically, in the moulding process, the foam layer 13 may be prepared directly on the heat insulating layer 12 by a foam-in-place process. The foam layer 13 and the heat insulating layer 12 jointly provides a heat preservation function for the temperature control layer 11. The foam layer 13 generally has a low thermal conductivity, and therefore has better heat preservation performance.

Optionally, the temperature control layer 11 is made of a 3003 aluminum material, the heat insulating layer 12 is made of a glass fiber material, the protection layer 14 is made of a carbon fiber material, and the foam layer 13 is made of polyurethane, phosphoenolpyruvate, or polyvinyl chloride.

Specifically, 3003 aluminum may be selected as the aluminum alloy material , which is an aluminum-manganese alloy material with excellent rust-proof performance. In addition, 3003 aluminum is soft and can be easily bent into various structures, and therefore is suitable for manufacturing flow channels and other structures. 3003 aluminum has a heat conductivity of up to 237 W/(m•K), a higher heat dissipation efficiency can be achieved by using 3003 aluminum as the material of the temperature control layer 11.

There are a large variety of glass fibers. Glass fiber is an inorganic nonmetallic material with excellent performance, good insulation, strong heat resistance, good corrosion resistance, and high mechanical strength, and can be used as a strengthening material, an electrical insulation material, and heat insulating and preservation material in composite materials. In this embodiment, the heat insulating layer 12 is made of glass fibers, which can better support the temperature control layer 11. In addition, due to the high strength of glass fibers, when the heat insulating layer 12 is connected with an external structure, the joint is not easily deformed, and the service life of the temperature control plate 1 can be better ensured.

Carbon fibers are high-strength, high-modulus fibers with a carbon content of 90% or above, and have the characteristics of high temperature resistance, friction resistance, electrical conduction, heat conduction, and corrosion resistance. The high strength and high modulus occur along the fiber axis, due to the preferred orientation of microcrystalline graphite structures in fiber axis direction. Combining the protection layer 14 made of carbon fiber material with the temperature control layer 11, the foam layer 13, and the heat insulating layer 12 can improve the overall stiffness of the temperature control plate 1, and the high strength of the protection layer can effectively resist the physical impact of the external environment and protect materials of other layers of the temperature control plate 1. Moreover, when the heat insulating layer 12 is made of glass fibers, the heat insulating layer 12 can provide a better heat insulating effect the thermal conductivity of the glass fibers is lower than that of carbon fibers.

A main function of the foam layer 13 is heat preservation, so that the temperature change of the temperature control plate 1 is not affected by the external environment, and the overall temperature can be quickly controlled through the temperature control layer 11, thereby realizing rapid temperature adjustment of the battery module. Polyurethane is light in weight, excellent in sound insulation and heat insulating, chemical resistant, good in electrical performance, easy to process, and low in water absorption, and has good stability as a heat preservation material. Similarly, phosphoenolpyruvate or polyvinyl chloride also has excellent heat preservation performance.

Optionally, the temperature control layer 11 includes a first temperature control layer 111 and a second temperature control layer 112, the first temperature control layer 111 and the second temperature control layer 112 are joined to form a flow channel structure, and the flow channel structure is configured for a liquid medium to circulate.

Specifically, as shown in FIG. 2, the first temperature control layer 111 and the second temperature control layer 112 are joined to form the flow channel structure for the liquid medium (such as coolant) to flow through, to better realize the effect of lowering or raising the temperature. The first temperature control layer 111 and the second temperature control layer 112 may be connected by brazing welding, to ensure the overall reliability of the temperature control plate 1.

A second aspect of the present disclosure provides a battery pack, including a tray 2, a battery module, and a composite temperature control plate 1 according to the first aspect. The tray 2 is connected with the mounting portion 121. The tray 2 and the composite temperature control plate 1 form a sealed cavity. The battery module is arranged on the temperature control layer 11 in the cavity.

Specifically, as shown in FIG. 3 to FIG. 4, the tray 2 is joined with the composite cold plate of this embodiment to form the sealed cavity, and the battery module is placed in the cavity and in contact with the temperature control layer 11. When the battery module operates, the temperature control plate 1 can provide a good effect of lowering or raising the temperature of the battery module, to ensure that the battery module can operate normally and prevent the battery from being damaged due to an excessively high or low temperature. In addition, the composite temperature control plate 1 has good heat preservation performance, allowing the battery module to be in an operating environment with stable temperature. Moreover, because the composite temperature control plate 1 in the present disclosure has higher strength and is further provided on the periphery thereof with the protective layer with higher strength, the overall rigidity of the battery pack is enhanced, thereby effectively resisting the impact of the external environment, such as external striking, and prolonging the service life of the battery pack.

Optionally, the tray 2 and the mounting portion 121 are connected by a coordination of a sealant and a fastener 21.

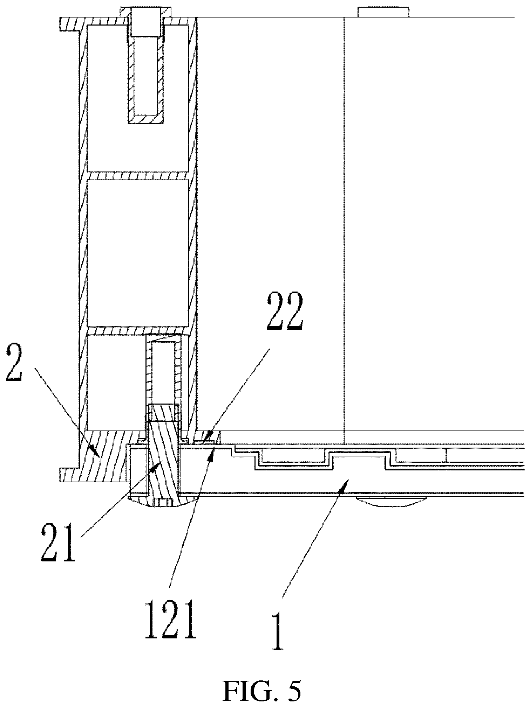

Specifically, as shown in FIG. 5, conventional welding methods are likely to shorten the service life of the joint between the tray 2 and the temperature control plate 1, and the arrangement of the mounting portion 121 in the present disclosure enhances the reliability of the connection between the temperature control plate 1 and the tray 2. In addition, the use of the fastener 21 and the sealant to reinforce the joint achieves a firmer connection between the temperature control plate 1 and the tray 2.

Optionally, a sealant accommodating groove 22 is provided on the tray 2, and the sealant is filled in the sealant accommodating groove 22.

Specifically, as shown in FIG. 5, when the temperature control plate 1 and the tray 2 are sealed with the sealant, the sealant accommodating groove 22 may be provided on the tray 2, and the sealant may be filled in the sealant accommodating groove 22 for adhesion, so that the sealant can be prevented from being poured into other portions that do not need to be connected or squeezed into other structures due to extrusion in the bonding adhesion, thereby improving the quality of adhesion.

The above embodiments are described focusing on the differences between the embodiments, and the different optimization features between the embodiments may be combined to form a better embodiment, where there are no contradictions, details will not be repeated herein for the sake of brevity.

A person skilled in the art should appreciate that modifications may be made to the foregoing embodiments without departing from the scope of the present disclosure. The scope of protection of the present disclosure is defined by the appended claims.

## Claims

1. A composite temperature control plate (1), configured for a battery pack, the composite temperature control plate (1) comprising:
a temperature control layer (11), configured to lower or raise a temperature of the battery pack; and
a protective layer, laminated and fixed on the temperature control layer (11);
the protective layer comprising a heat insulating layer (12), the heat insulating layer (12) being made of a heat insulating material;
the protective layer comprising a mounting portion (121) extending at least to a periphery of the temperature control layer (11), the mounting portion (121) being configured to connect with outside;
**characterized in that** the temperature control layer (11) is entirely embedded on the heat insulating layer (12), a material strength of the heat insulating layer (12) is higher than a material strength of the temperature control layer (11), and a portion of the heat insulating layer (12) extending to the periphery of the temperature control layer (11) is the mounting portion (121).

2. The composite temperature control plate (1) according to claim 1, wherein the protective layer further comprises a protection layer (14), the temperature control layer (11), the heat insulating layer (12), and the protection layer (14) are sequentially laminated, and a material strength of the protection layer (14) is higher than a material strength of the heat insulating layer (12).

3. The composite temperature control plate (1) according to claim 2, wherein a thermal conductivity of the heat insulating layer (12) is lower than a thermal conductivity of the protection layer (14).

4. The composite temperature control plate (1) according to claim 2 or 3, wherein the protective layer (14) further comprises a foam layer (13), and the foam layer (13) is arranged between the heat insulating layer (12) and the protection layer (14).

5. The composite temperature control plate (1) according to claim 4, wherein the temperature control layer (11) is made of an aluminum alloy material, the heat insulating layer (12) is made of a glass fiber material, the protection layer (14) is made of a carbon fiber material, and the foam layer (13) is made of polyurethane, phosphoenolpyruvate, or polyvinyl chloride.

6. The composite temperature control plate (1) according to any of the previous claims, wherein the temperature control layer (11) comprises a first temperature control layer (111) and a second temperature control layer (112), the first temperature control layer (111) and the second temperature control layer (112) are joined to form a flow channel structure, and the flow channel structure is configured for a liquid medium to circulate.

7. A battery pack, comprising:
a tray (2), a battery module, and the composite temperature control plate (1) according to any one of claims 1-6,
the tray (2) being connected with the mounting portion (121), the tray (2) and the composite temperature control plate (1) forming a sealed cavity, the battery module being arranged in the cavity, and the battery module being in contact with the temperature control layer (1).

8. The battery pack according to claim 7, wherein the tray (2) and the mounting portion (121) are connected by a coordination of a sealant and a fastener (21).

9. The battery pack according to claim 8, wherein a sealant accommodating groove (22) is provided on the tray (2), and the sealant is filled in the sealant accommodating groove (22).

## Patentansprüche

1. Zusammengesetzte Temperaturregelungsplatte (1), die für ein Batteriepack konfiguriert ist, die zusammengesetzte Temperaturregelungsplatte (1) umfassend:
eine Temperaturregelungsschicht (11), die konfiguriert ist, um eine Temperatur des Batteriepacks zu senken oder zu erhöhen; und
eine schützende Schicht, die auf die Temperaturregelungsschicht (11) laminiert und angebracht ist;
die schützende Schicht umfassend eine Wärmeisolierschicht (12), wobei die Wärmeisolierschicht (12) aus einem Wärmeisoliermaterial hergestellt ist;
die schützende Schicht umfassend einen Montageabschnitt (121), der sich mindestens bis zu einer Peripherie der Temperaturregelungsschicht (11) erstreckt, wobei der Montageabschnitt (121) konfiguriert ist, um sich mit der Außenseite zu verbinden;
**dadurch gekennzeichnet, dass**
die Temperaturregelungsschicht (11) vollständig in die Wärmeisolierschicht (12) eingebettet ist, eine Materialfestigkeit der Wärmeisolierschicht (12) höher als eine Materialfestigkeit der Temperaturregelungsschicht (11) ist, und ein Abschnitt der Wärmeisolierschicht (12), der sich zu der Peripherie der Temperaturregelungsschicht (11) erstreckt, der Montageabschnitt (121) ist.

2. Zusammengesetzte Temperaturregelungsplatte (1) nach Anspruch 1, wobei die schützende Schicht ferner eine Schutzschicht (14) umfasst, die Temperaturregelungsschicht (11), die Wärmeisolierschicht (12) und die Schutzschicht (14) sequenziell laminiert sind, und eine Materialfestigkeit der Schutzschicht (14) höher als eine Materialfestigkeit der Wärmeisolierschicht (12) ist.

3. Zusammengesetzte Temperaturregelungsplatte (1) nach Anspruch 2, wobei eine thermische Leitfähigkeit der Wärmeisolierschicht (12) niedriger als eine thermische Leitfähigkeit der Schutzschicht (14) ist.

4. Zusammengesetzte Temperaturregelungsplatte (1) nach Anspruch 2 oder 3, wobei die schützende Schicht (14) ferner eine Schaumschicht (13) umfasst, und die Schaumschicht (13) zwischen der Wärmeisolierschicht (12) und der Schutzschicht (14) angeordnet ist.

5. Zusammengesetzte Temperaturregelungsplatte (1) nach Anspruch 4, wobei die Temperaturregelungsschicht (11) aus einem Aluminiumlegierungsmaterial hergestellt ist, die Wärmeisolierschicht (12) aus einem Glasfasermaterial hergestellt ist, die Schutzschicht (14) aus einem Kohlenstofffasermaterial hergestellt ist, und die Schaumschicht (13) aus Polyurethan, Phosphoenolpyruvat oder Polyvinylchlorid hergestellt ist.

6. Zusammengesetzte Temperaturregelungsplatte (1) nach einem der vorstehenden Ansprüche, wobei die Temperaturregelungsschicht (11) eine erste Temperaturregelungsschicht (111) und eine zweite Temperaturregelungsschicht (112) umfasst, die erste Temperaturregelungsschicht (111) und die zweite Temperaturregelungsschicht (112) verknüpft sind, um eine Strömungskanalstruktur auszubilden, und die Strömungskanalstruktur für eine Zirkulation eines flüssigen Mediums konfiguriert ist.

7. Batteriepack, umfassend:
ein Fach (2), ein Batteriemodul und die zusammengesetzte Temperaturregelungsplatte (1) nach einem der Ansprüche 1 bis 6,
wobei das Fach (2) mit dem Montageabschnitt (121) verbunden ist, das Fach (2) und die zusammengesetzte Temperaturregelungsplatte (1) einen abgedichteten Hohlraum ausbilden, das Batteriemodul in dem Hohlraum angeordnet ist und das Batteriemodul mit der Temperaturregelungsschicht (1) in Kontakt steht.

8. Batteriepack nach Anspruch 7, wobei das Fach (2) und der Montageabschnitt (121) durch eine Koordination eines Dichtungsmittels und eines Befestigungselements (21) verbunden sind.

9. Batteriepack nach Anspruch 8, wobei eine dichtungsmittelaufnehmende Nut (22) auf dem Fach (2) bereitgestellt ist, und das Dichtungsmittel in der dichtungsmittelaufnehmenden Nut (22) eingefüllt ist.

## Revendications

1. Carte de régulation de température composite (1), conçue pour un bloc-batterie, la carte de régulation de température composite (1) comprenant :
une couche de régulation de température (11), configurée pour abaisser ou augmenter une température du bloc-batterie ; et
une couche de protection, stratifiée et fixée sur la couche de régulation de température (11) ;
la couche de protection comprenant une couche d'isolation thermique (12), la couche d'isolation thermique (12) étant constituée d'un matériau d'isolation thermique ;
la couche de protection comprenant une partie de montage (121) s'étendant au moins jusqu'à une périphérie de la couche de régulation de température (11), la partie de montage (121) étant conçue pour se raccorder avec l'extérieur ;
**caractérisée en ce que**
la couche de régulation de température (11) est entièrement intégrée sur la couche d'isolation thermique (12), une résistance de matériau de la couche d'isolation thermique (12) est supérieure à une résistance de matériau de la couche de régulation de température (11), et une partie de la couche d'isolation thermique (12) s'étendant jusqu'à la périphérie de la couche de régulation de température (11) est la partie de montage (121).

2. Carte de régulation de température composite (1) selon la revendication 1, dans laquelle la couche de protection comprend en outre une couche de protection (14), la couche de régulation de température (11), la couche d'isolation thermique (12) et la couche de protection (14) sont stratifiées de manière séquentielle, et une résistance de matériau de la couche de protection (14) est supérieure à la résistance de matériau de la couche d'isolation thermique (12).

3. Carte de régulation de température composite (1) selon la revendication 2, dans laquelle une conductivité thermique de la couche d'isolation thermique (12) est inférieure à une conductivité thermique de la couche de protection (14).

4. Carte de régulation de température composite (1) selon la revendication 2 ou 3, dans laquelle la couche de protection (14) comprend en outre une couche de mousse (13), et la couche de mousse (13) est agencée entre la couche d'isolation thermique (12) et la couche de protection (14).

5. Carte de régulation de température composite (1) selon la revendication 4, dans laquelle la couche de régulation de température (11) est constituée d'un matériau en alliage d'aluminium, la couche d'isolation thermique (12) est constituée d'un matériau en fibre de verre, la couche de protection (14) est constituée d'un matériau en fibre de carbone, et la couche de mousse (13) est constituée de polyuréthane, phosphoénolpyruvate, ou polychlorure de vinyle.

6. Carte de régulation de température composite (1) selon l'une quelconque des revendications précédentes, dans laquelle la couche de régulation de température (11) comprend une première couche de régulation de température (111) et une seconde couche de régulation de température (112), la première couche de régulation de température (111) et la seconde couche de régulation de température (112) sont jointes pour former une structure de canal d'écoulement, et la structure de canal d'écoulement est conçue pour la circulation d'un milieu liquide.

7. Bloc-batterie, comprenant :
un plateau (2), un module de batterie, et la carte de régulation de température composite (1) selon l'une quelconque des revendications 1 à 6,
le plateau (2) étant raccordé à la partie de montage (121), le plateau (2) et la carte de régulation de température composite (1) formant une cavité étanche, le module de batterie étant agencé dans la cavité, et le module de batterie étant en contact avec la couche de régulation de température (1).

8. Bloc-batterie selon la revendication 7, dans lequel le plateau (2) et la partie de montage (121) sont raccordés par une coordination d'un produit d'étanchéité et d'un élément de fixation (21).

9. Bloc-batterie selon la revendication 8, dans lequel une rainure de réception de produit d'étanchéité (22) est prévue sur le plateau (2), et le matériau d'étanchéité est rempli dans la rainure de réception de produit d'étanchéité (22).
